# EUROPEAN PATENT APPLICATION

(11) **EP 2 637 168 A1**
(43) Date of publication of application: **11.09.2013**
(21) Application number: 11837964.3
(22) Date of filing: 31.10.2011
(51) Int. Cl.: G11B 17/051

(54) **DISK DEVICE**

(30) Priority: 02.11.2010 JP 2010246720
(71) Applicant: Funai Electric Co., Ltd., Daito-shi Osaka 574-0013 (JP)
(72) Inventor: TAKASAKA Daisuke, Daito-Shi Osaka 574-0013 (JP); TAMURA Tetsuya, Daito-Shi Osaka 574-0013 (JP); NAKATANI Masaki, Daito-Shi Osaka 574-0013 (JP); ICHINOHE Katsuo, Daito-Shi Osaka 574-0013 (JP); UESHIMA Rikiya, Daito-Shi Osaka 574-0013 (JP); KOBAYASHI Tomohiro, Daito-Shi Osaka 574-0013 (JP); NAKAGAWA Yoshiyuki, Daito-Shi Osaka 574-0013 (JP); MIZUTA Yasuhide, Daito-Shi Osaka 574-0013 (JP)
(74) Representative: Grünecker, Kinkeldey, Stockmair & Schwanhäusser
(86) International application number: PCT/JP2011/075037
(87) International publication number: WO 2012/060314

(57) **Abstract**

This disk device is provided with a loader chassis, a conveyance roller, a flap, and holddown springs. A disk, which is slotted into a disk insertion opening created on the front surface of the loader chassis, is sandwiched by the conveyance roller and the flap and conveyed into the loader chassis by the conveyance roller. Spring seats are provided on the roof plate of the loader chassis. The holddown springs are mounted on the spring seats so as to bias the flap toward the conveyance roller. The spring seat has an L-shaped frame. The L-shaped frame comprises a support plate, which is formed integrally with an edge of the opening part provided on the roof plate, and a fulcrum plate, which is bent at a right angle at the front end of said support plate, and is pulled to rise toward the flap by bending the base of the support plate. The fulcrum plate has a stopper section, which protrudes from the flap-side front end of the fulcrum plate toward the flap, and a fulcrum body. Slanted guiding edges are formed by cutting off the roof-plate-side front edges of the fulcrum plate. The coil section of the holddown spring is fitted around the fulcrum body along the slanted guiding edges.

## Description

### Technical Field

The present invention relates to a disk device, and in particular, relates to installation of a holddown spring for a flap.

### Background Art

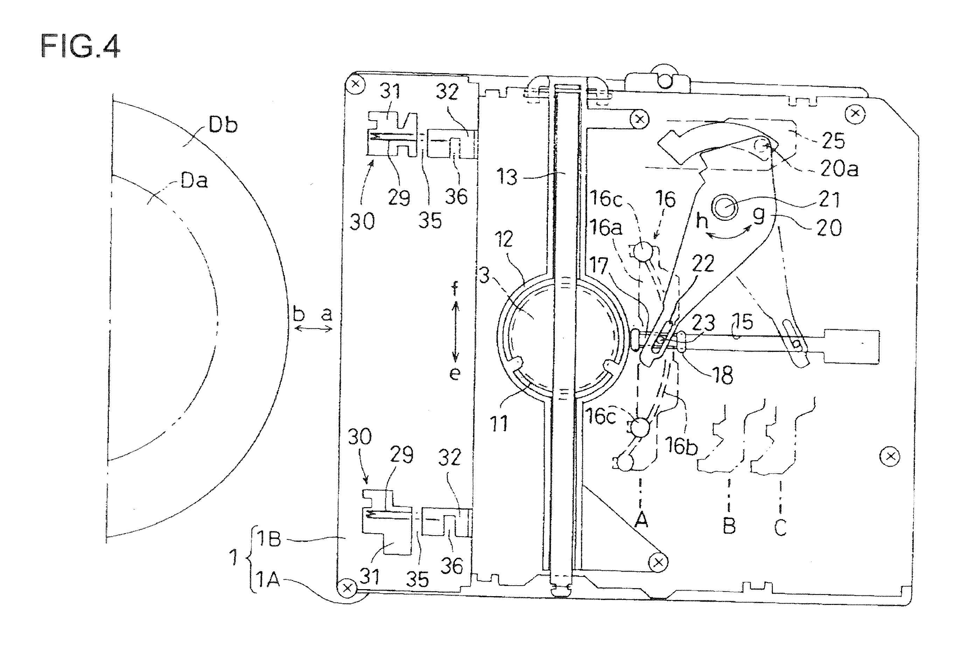

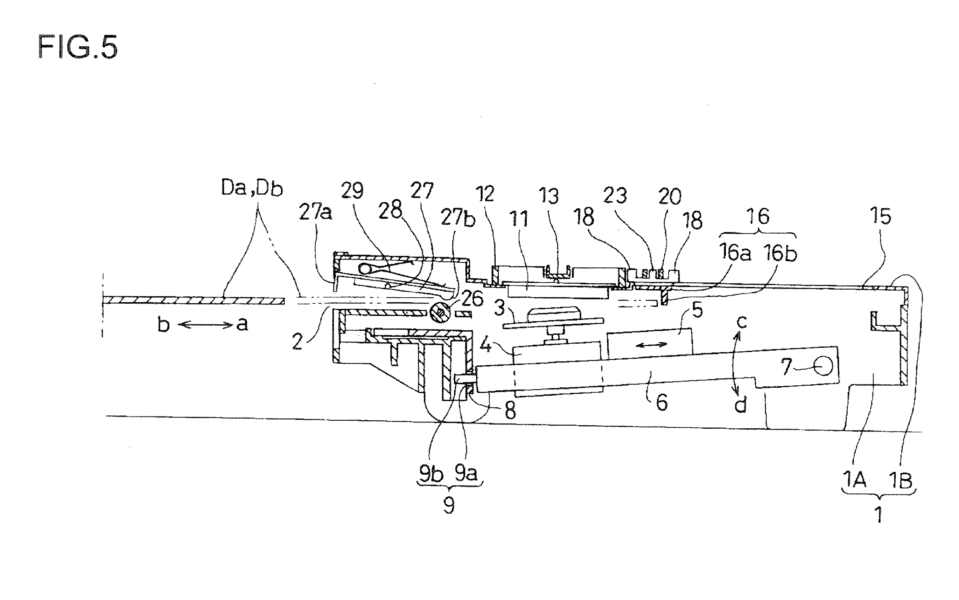

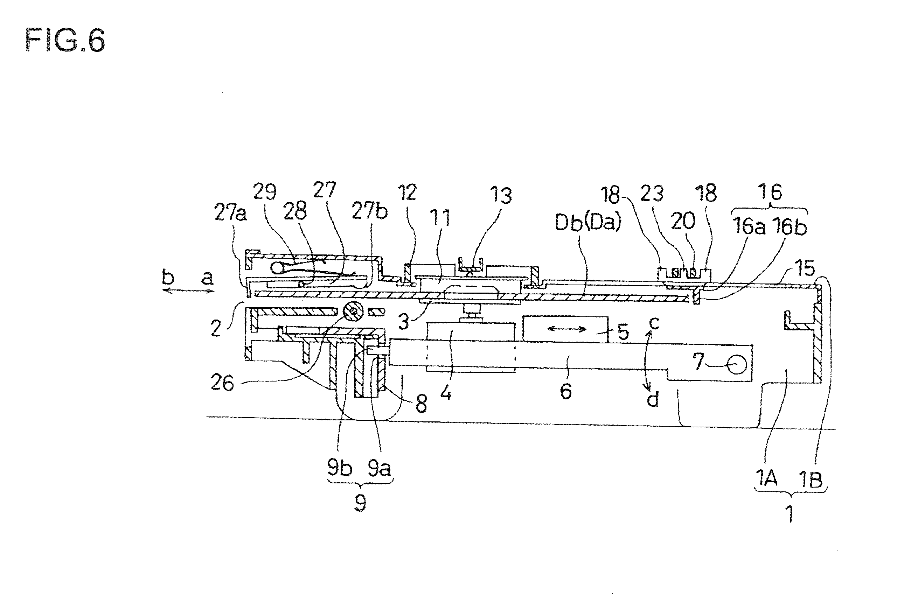

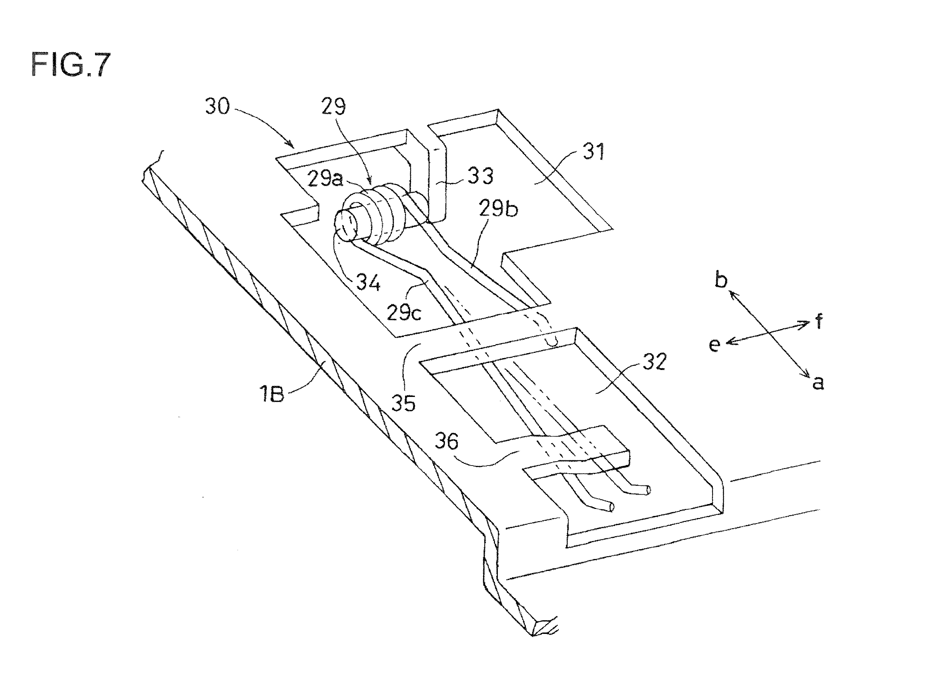

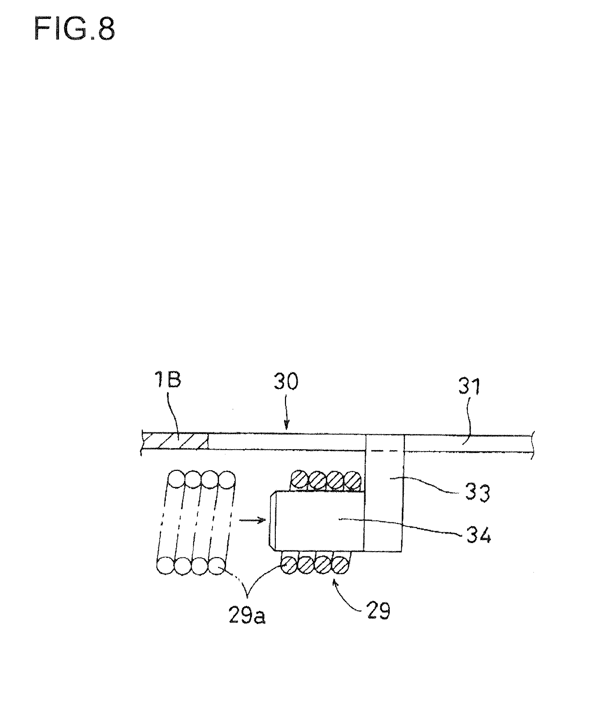

FIGS. 4 to 8 show an example of a conventional disk device. This conventional disk device is a Blu-ray Disc recorder (or player) provided with a disk slot loading mechanism. FIGS. 4 and 5 show the conventional disk device in an unloading state. FIG. 6 shows the conventional disk device in a loading state. FIGS. 7 and 8 show a relevant portion of the conventional disk device.

As shown in FIGS. 4 and 5, the conventional disk device includes a loader chassis 1 including a chassis main body 1A and a lid panel 1B placed to cover the chassis main body 1A. In a front surface of the loader chassis 1, a disk insertion slot 2 is formed for slotting in or out small and large disks Da and Db having diameters of 8 cm and 12 cm, respectively, in a direction along an arrow a or b. Furthermore, inside the loader chassis 1, a traverse chassis 6 is arranged; on the traverse chassis 6, there are mounted a spindle motor 4 having mounted thereon a turntable 3 and an optical pickup 5 that is movable along diameters of the disks Da and Db.

A rear part of the traverse chassis 6 is supported on the loader chassis 1 via a support shaft 7 so as to be rotatable in directions along arrows c and d. In a front part of the chassis main body 1A, a cam slider 8 is arranged so as to be slidable in right-left directions along arrows e and f which are perpendicular to the directions along arrows a and b. The cam slider 8 and the traverse chassis 6 are operatively connected to each other by a cam mechanism 9 including a cam groove 9a formed in the cam slider 8 and a cam pin 9b integrally projecting from a front surface of the traverse chassis 6 to be inserted into the cam groove 9a.

As shown in FIGS. 4 and 5, a clamper 11 disposed opposite to the turntable 3 is disposed elevatably inside a clamper holder 12 of the lid panel 1B, and a holddown frame 13 is provided to resiliently press the clamper 11. The disk Da or Db is clamped by the clamper 11 and the turntable 3.

As shown in FIG. 4, an elongate hole 15 is formed to extend rearward from a center of the lid panel 1B in the directions along arrows a and b. A disk stopper 16 is disposed on a rear surface side of the lid panel 1B. The disk stopper 16 includes a main body 16a, an arc-shaped plate 16b that is bent at right angle from the main body 16a, and a pair of cylindrical columns 16c that are disposed at opposing sides of a front surface of the arc-shaped plate 16b, the cylindrical columns 16c being integrally formed with the front surface of the arc-shaped plate 16b. A guide piece 17 integrally projecting from the disk stopper 16 is movably inserted in the elongate hole 15, and engagement pieces 18 laterally extending from both ends of the guide piece 17 are engaged with the front surface of the lid panel 1B, whereby the disk stopper 16 is formed to be movable along the elongate hole 15.

As shown in FIG. 4, on a front surface side of the lid panel 1B, a disk arm 20 is disposed to be rotatable about a support shaft 21 in directions along arrows g and h. An elongate connecting hole 22 is formed in an end part of the disk arm 20, and the connecting hole 22 is fitted onto a cylindrical-column-shape connecting pin 23 projecting from a center of the guide piece 17, whereby the disk arm 20 and the disk stopper 16 are operatively connected to each other. When the disk Da or Db pushes the disk stopper 16 located at an unloading position A (see a solid line in FIG. 4), the disk stopper 16 is moved in the direction along arrow a. Then, the small disk Da is stopped at a small-disk loading position B (see a one-dot chain line in FIG. 4), and the large disk Db is stopped at a large-disk loading position C (see a two-dot chain line in FIG. 4). In association therewith, the disk arm 20 is rotated in the direction along the arrow g.

As shown in FIG. 4, at a side part of the chassis main body 1A, a connection member 25 is disposed to be movable in the directions along arrows a and b, and the connection member 25 is pulled by a spring (unillustrated) in the direction along arrow a. One end part of the connection member 25 is connected to a connection rod 20a projecting from a base end of the disk arm 20. The other end part of the connection member 25 is disengageably engaged with the cam slider 8 via an engagement mechanism (unillustrated).

As shown in FIG. 5, a conveyance roller 26 is disposed in a front part of the chassis main body 1A to be opposite to the disk insertion slot 2, and the conveyance roller 26 is rotatable both forward and backward. A flap 27 is disposed on the rear surface side of the lid panel 1B to be opposite to the conveyance roller 26, and the flap 27 is rotatable about a pivot shaft 28. A stopper piece 27a is provided at a front edge of the flap 27. Furthermore, an arc-shaped projection portion 27b is formed at a rear edge of the flap 27. Between the flap 27 and the lid panel 1B, there is interposed a holddown spring 29 that presses the projection portion 27b toward the conveyance roller 26.

Next, a description will be given of how the conventional disk device operates. FIG. 4 (solid line) and FIG. 5 show the conventional disk device in the unloading state. When a disk Da or Db is slotted in through the disk insertion slot 2 (see arrow a), based on a detection signal of a sensor that detects the slotting-in, the conveyance roller 26 rotates. The disk Da or Db held by the rotating conveyance roller 26 and the flap 27 is conveyed into the loader chassis 1.

By the conveyed disk Da or Db, the disk stopper 16 located at the unloading position A is pushed in the direction along arrow a. In association therewith, via the disk arm 20, the connection member 25 moves a predetermined distance in the direction along arrow b. By an operation of an engagement mechanism (unillustrated) provided between the connection member 25 and the cam slider 8, if the conveyed disk is a small disk Da, the disk stopper 16 is moved to the small-disk loading position B. And, the small disk Da is concentrically positioned on the turntable 3. If the conveyed disk is a large disk Db, the disk stopper 16 is moved to the large-disk loading position C. And, the large disk Db is concentrically positioned on the turntable 3.

In association with the movement of the connection member 25 in the direction along arrow b, by an operation of an engagement mechanism (unillustrated), the cam slider 8 is made to slightly slide in a direction along arrow e. And, a cam rack (unillustrated) provided in the cam slider 8 engages with a drive pinion (unillustrated).

Thereafter, by rotation of the drive pinion (unillustrated), the cam slider 8 is made to slide in the direction along arrow e. The cam mechanism 9 makes the traverse chassis 6 rotate in the direction along arrow c. And, as shown in FIG. 6, the disk Da or Db is lifted by the turn table 3, to be clamped by the turn table 3 and the clamper 11.

Simultaneously, the cam slider 8 is made to engage with the flap 27, and thereby, the flap 27 rotates about the pivot shaft 28 against the holddown spring 29 to move away from the disk Da or Db. The stopper piece 27a of the flap 27 closes the disk insertion slot 2. And, the disk stopper 16 slightly moves in the direction along arrow a, to move away from the disk Da or Db.

Then subsequently, by the spindle motor 4, via the turntable 3, the disk Da or Db is made to rotate at a high speed, and the optical pickup 5 moves in a diameter direction of the disk Da or Db. By means of the optical pickup 5, information recorded in the disk Da or Db is read out.

The holddown spring 29 includes a pair of right and left holddown springs which are fitted to spring seats 30 at both opposing sides in the front part of the lid panel 1B, as shown in FIGS. 7 and 8.

The spring seats 30 each have first and second openings 31 and 32 which are formed at both sides in the front part of the lid panel 1B with a predetermined distance therebetween in the directions along arrows a and b. A support frame 33 extends from a front edge of the first opening 31 in a zigzag manner toward the flap 27, and at an end of the support frame 33, a cylindrical-column-shaped support shaft 34 is integrally formed to project in directions along arrows e and f in parallel with the lid panel 1B. Between the first and second openings 31 and 32, there is provided a partition panel 35. From a side edge of the second opening 32, a projection piece 36 is integrally formed to project therefrom into the second opening 32. A part of the projection piece 36 from a center thereof to an end thereof is bent toward the flap 27 side.

The holddown spring 29 is formed of a coil portion 29a wound three or four times and two rod portions 29b and 29c which extends from both ends of the coil portion 29a.

A description will be given of a procedure of fitting the holddown spring 29. With the lid panel 1B put upside down, the coil portion 29a of the holddown spring 29 is fitted onto the support shaft 34. Then, with one rod portion 29b in contact with the partition panel 35, the other rod portion 29c is put on the projection piece 36 and temporarily fixed (see a phantom line in FIG. 7). Then subsequently, after the flap 27 is fitted to the lid panel 1B, the other rod portion 29c is taken off from the projection piece 36 and brought into contact with the flap 27 (see FIG. 5). Incidentally, a related technique is described in Patent Literature 1 listed below.

### Citation List

### Patent Literature

Patent Literature 1: JP-A-2007-80337

### Summary of Invention

### Technical Problem

In the above-described conventional configuration, the support shaft 34 is disposed parallel and close to the lid panel 1B. Thus, in manually fitting the coil portion 29a of the holddown spring 29 onto the support shaft 34, a finger of an operator is liable to be caught by the lid panel 1B, and this increases time and trouble of the fitting operation, making the operation so troublesome.

Besides, since the support shaft 34 is cylindrical-column-shaped, in fitting the flap 27 to the lid panel 1B, an instrument or a finger of an operator is liable to be caught by the coil portion 29a to cause the coil portion 29a to come off from the support shaft 34.

In view of the above-discussed conventionally experienced inconveniences, an object of the present invention is to provide a disk device that allows an easy operation of fitting a holddown spring for a flap, and that allows the holddown spring to be securely maintained in a fitted state.

### Solution to Problem

To achieve the above object, a disk device according to the present invention includes a loader chassis that includes a disk insertion slot formed in a front surface thereof, a conveyance roller that conveys a disk slotted in through the disk insertion slot into the loader chassis, a flap that holds the disk in cooperation with the conveyance roller, and a holddown spring that presses the flap toward the conveyance roller. Here, the loader chassis includes: a chassis main body; and a lid panel where a spring seat to which the holddown spring is fitted is provided, the lid panel is provided with an opening, the spring seat includes an L-shaped frame that includes a support panel that is integrally formed at an edge of the opening, and a support shaft panel that is bent at a right angle from an end of the support panel, the support panel is bent at a root part thereof such that the L-shaped frame is raised toward the flap side, the support shaft panel includes a stopper portion that projects toward the flap side from a flap-side edge at an end of the support shaft panel, and a support shaft main body between the stopper portion and the support panel, a sloped guide edge is formed by cutting an end side of a lid panel-side edge of the support shaft panel, and the holddown spring includes a coil portion that is fitted, along the sloped guide edge, onto the support shaft main body, a first rod portion that extends from one end of the coil portion to engage with the lid portion, and a second rod portion that extends from another end of the coil portion to be in contact with the flap.

In this configuration, in regard to manually fitting the coil portion of the holddown spring onto the support shaft main body of the support shaft panel, the sloped guide edge formed at an end of the support shaft panel extends in an oblique direction away from the lid panel. Thus, it is possible to easily fit the coil portion of the holddown spring along the sloped guide edge onto the support shaft main body. Furthermore, in regard to fitting the flap to the lid panel, the stopper portion is provided at an end of the support shaft panel to deal with a case where an instrument or an operator finger is caught by the coil portion of the holddown spring. Thus, the coil portion does not come off from the support shaft panel, which contributes to efficient operation of fitting the flap.

In the above-described disk device, a width of the support shaft main body may be set wider than a width of the coil portion, and a projection distance of the stopper portion may be set larger than an outer diameter of a wire member forming the holddown spring. The L-shaped frame may be obtained as a portion that is left after cutting the lid panel to form the opening. In the above-described desk device, the stopper portion may include a sloped side edge at an edge thereof on the support shaft main body side, and the sloped side edge may be sloped at a predetermined slope angle with respect to the support shaft main body.

Further features and advantages of the present invention will be made clear in the following description of embodiments.

### Advantageous Effects of Invention

According to the present invention, it is possible to provide a disk device that allows an easy operation of fitting a holddown spring for a flap, and that allows the holddown spring to be securely maintained in the fitted state.

### Brief Description of Drawings

FIG. 1 is a perspective view of a relevant part of a disk device as one embodiment of the present invention;
FIG. 2 is a transverse sectional view of the relevant part;
FIG. 3A is a transverse sectional view illustrating a fitted state of a holddown spring;
FIG. 3B is a transverse sectional view illustrating a fitted state of the holddown spring;
FIG. 4 is a plan view showing an unloading state of a conventional example;
FIG. 5 is a longitudinal sectional view of the unloading state;
FIG. 6 is a longitudinal sectional view of the unloading state;
FIG. 7 is a perspective view of the relevant part; and
FIG. 8 is a transverse sectional view of the relevant part.

### Description of Embodiments

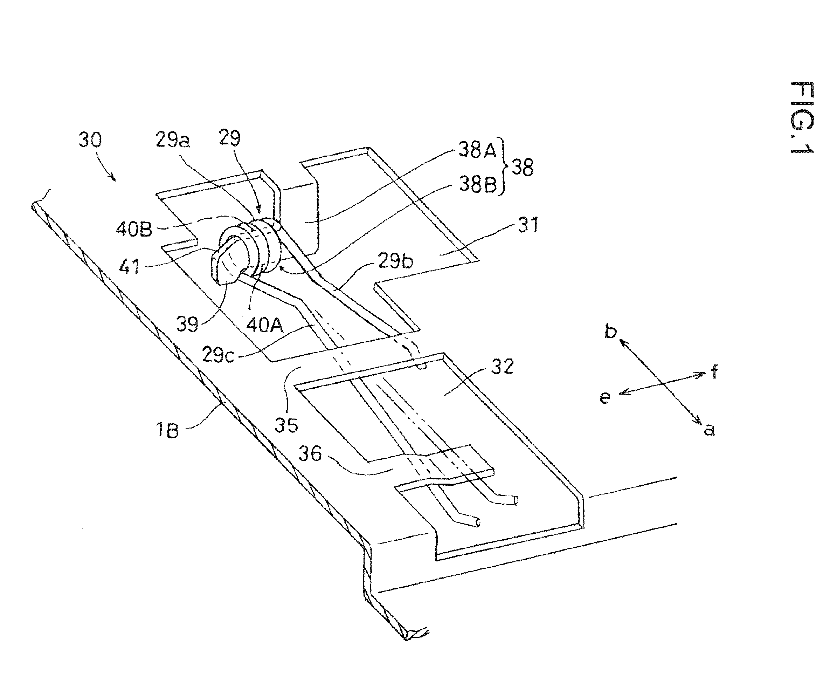

Embodiments of the present invention will be described below with reference to the accompanying drawings. FIGS. 1, 2, 3A, and 3B show a relevant part of a disk device embodying the present invention. This is a Blu-ray Disc recorder (or player) provided with a disk slot loading mechanism. A spring seat 30 has an L-shaped frame 38 obtained as a portion that is left after cutting a metal lid panel 1B to form a first opening 31. The L-shaped frame 38 includes a support panel 38A that is integrally formed at an edge of the first opening 31 and a support shaft panel 38B that is bent at a right angle from an end of the support panel 38A. A base part of the support panel 38A is bent, so that the L-shaped frame 38 is pulled to rise toward the flap 27. At an end of the support shaft panel 38B, a stopper portion 39 is provided that projects from a flap-side edge 40A toward the flap 27 side. A part of the support shaft panel 38B between the stopper portion 39 and the support panel 38A is a support shaft main body 40 that supports a coil portion 29a of a holddown spring 29. Configurations other than the above are substantially the same as those shown in FIGS. 4 to 8. Thus, in the following descriptions, portions that are the same as those shown in the drawings will be denoted by the same symbols, and descriptions thereof will be omitted.

As shown in FIGS. 1, 2, 3A, and 3B, a side edge of the stopper portion 39 opposed to the support shaft main body 40 is sloped by a predetermined slope angle α (for example 45°), and thereby, a sloped side edge 39a is formed. A part of a lid panel-side edge 40B of the support shaft panel 38B, the part extending from the support shaft main body 40 to an end of the support shaft panel 38B, is cut to form a sloped guide edge 41 that is sloped at a predetermined slope angle β (for example, 30°).

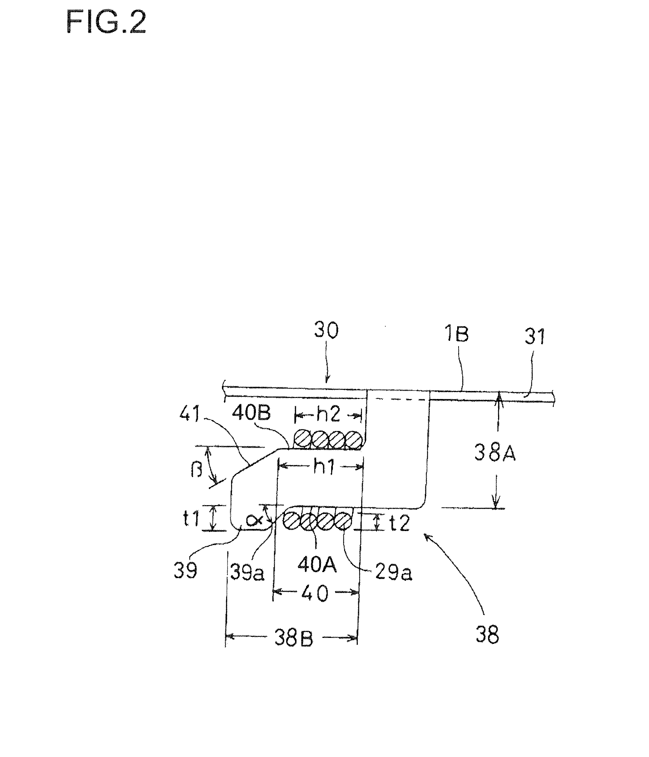

As shown in FIG. 2, the flap-side edge 40A and the lid panel-side edge 40B of the support shaft main body 40 are formed parallel to each other. A width h1 of the support shaft main body 40 is set larger than a width h2 of the coil portion 29a. A projection distance t1 of the stopper portion 39 is set larger than an outer diameter t2 of a wire member forming the holddown spring 29.

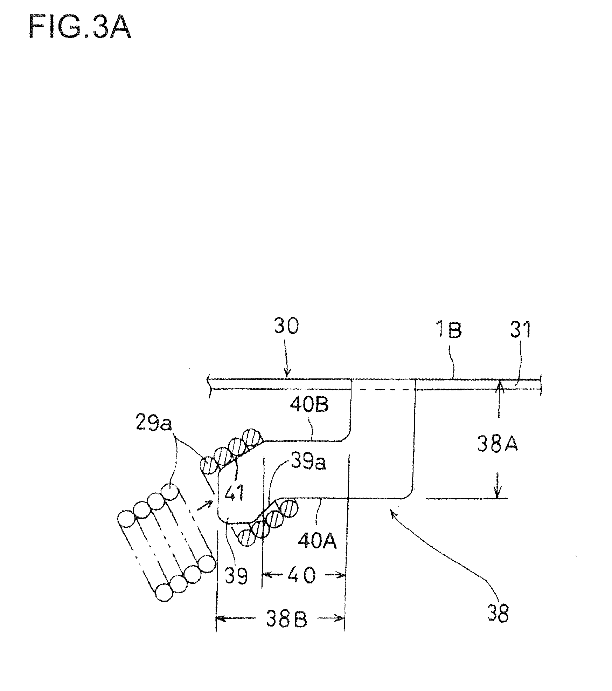

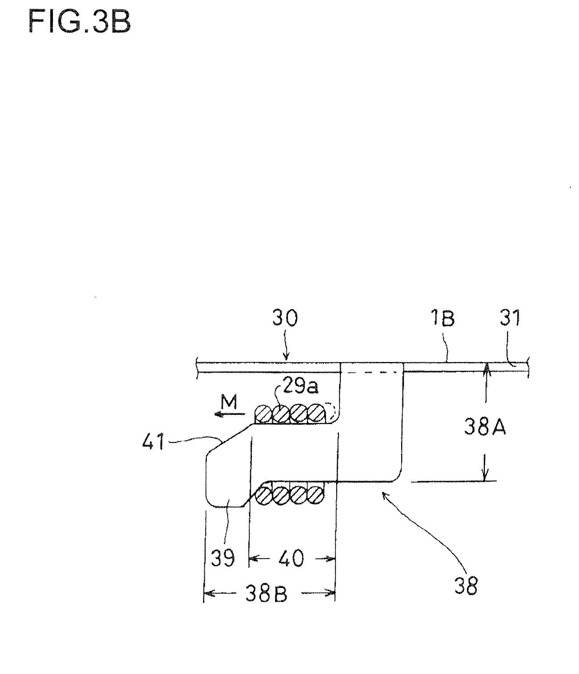

A description will be given of a procedure of fitting the holddown spring 29. With the lid panel 1B put upside down, as shown in FIG. 3A, the coil portion 29a of the holddown spring 29 is moved along the sloped side edge 39a of the stopper portion 39 and the sloped guide edge 41 into contact with the end of the support shaft panel 38B. Then, as shown in FIG. 3B, the coil portion 29a is fitted onto the support shaft main body 40. Then subsequently, as shown in FIG. 1, one rod portion 29b is brought into contact with a partition panel 35, and the other rod portion 29c is put on a projection piece 36 and temporarily fixed. Thereafter, the flap 27 is fitted to the lid panel 1B, and then, the other rod portion 29c is removed from the projection piece 36 and brought into contact with the flap 27 (see FIG. 5).

According to the above configuration, as shown in FIG. 3A, in regard to manually fitting the coil portion 29a of the holddown spring 29 onto the support shaft main body 40 of the support shaft panel 38B, the sloped side edge 39a of the stopper portion 39 and the sloped guide edge 41 formed at the end of the support shaft panel 38B extend in an oblique direction away from the lid panel 1B. This makes it easy to move the coil portion 29a of the holddown spring 29 along the sloped side edge 39a of the stopper portion 39 and the sloped guide edge 41 to fit the coil portion 29a onto the support shaft main body 40 of the support shaft panel 38B.

As shown in FIG. 2, the projection distance t1 of the stopper portion 39 that is integrally formed to project from the end of the support shaft panel 38B is set larger than the outer diameter t2 of the wire member that forms the holddown spring 29. Furthermore, the width h1 of the support shaft main body 40 is set larger than the width h2 of the coil portion 29a. Thus, as shown in FIG. 3B, even if an instrument or a finger of an operator is caught by the coil portion 29a fitted onto the support shaft main body 40 in fitting the flap 27 to the lid panel 1B, so that an excessive load M is applied to the coil portion 29a, the coil portion 29a never comes off from the support shaft main body 40. Thus, it is possible to securely maintain the holddown spring 29 fitted to the spring seat 30. Moreover, it is possible to efficiently perform the operation of fitting the flap 27.

As shown in FIG.1, the L-shaped frame 38 including the support panel 38A and the support shaft panel 38B is obtained as a portion that is left after the metal lid panel 1B is cut to form the first opening 31. Thus, the number of components is not increased by forming the L-shaped frame 38, and the production cost can be reduced.

As discussed above, in the disk device of the present embodiment, a disk insertion slot is formed in the front surface of a loader chassis including a chassis main body and a lid panel, a traverse chassis having a turntable and an optical pickup mounted thereon is disposed inside the loader chassis, a conveyance roller is disposed in a front part of the chassis main body to be opposite to the disk insertion slot, the conveyance roller being rotatable both forward and backward, a flap is disposed on a rear surface side of the lid panel to be opposite to the conveyance roller, the flap being rotatable about a pivot shaft, a holddown spring that presses the flap toward the conveyance roller is fitted to a spring seat of the lid panel, a disk slotted in through the disk insertion slot is held by the conveyance roller and the flap to be conveyed into the loader chassis, the disk is rotated at a high speed by the turntable, and the optical pickup reads out information recorded on the disk. Here, the disk device is characterized in that the spring seat has an L-shaped frame obtained as a portion that is left after cutting the metal lid panel to form an opening, that the L-shaped frame includes a support panel that is integrally formed at an edge of the opening and a support shaft panel that is bent at a right angle from an end of the support panel, that a root part of the support panel is bent, so that the L-shaped frame is pulled to rise toward the flap, that a stopper portion is provided that projects from an end of the support shaft panel at a flap-side edge toward the flap side, that a part of the support shaft panel between the stopper portion and the support panel is a support shaft main body that supports a coil portion of the holddown spring, that a part of a lid panel-side edge of the support shaft panel, the part extending from the support shaft main body to an end of the support shaft panel, is cut to form a sloped guide edge, and that the coil portion of the holddown spring is moved along the sloped guide edge and fitted onto the support shaft main body, and that two rod portions extending from both ends of the coil portion of the holddown spring are respectively engaged with the lid panel and the flap.

With this configuration, in regard to manually fitting the coil portion of the holddown spring onto the support shaft main body of the support shaft panel, the sloped guide edge formed at an end of the support shaft panel extends in an oblique direction away from the lid panel. Thus, it is possible to easily fit the coil portion of the holddown spring along the sloped guide edge onto the support shaft main body.

Furthermore, in regard to fitting the flap to the lid panel, the stopper portion is provided at an end of the support shaft panel to deal with a case where an instrument or a finger of an operator is caught by the coil portion of the holddown spring. Thus, the coil portion does not come off from the support shaft panel, and this contributes to efficient operation of fitting the flap.

Furthermore, the L-shaped frame including the support panel and the support shaft panel is obtained as a portion that is left after cutting the metal lid panel to form the opening. Thus, the number of components is not increased by forming the L-shaped frame. Moreover, it is possible to reduce production cost.

Moreover, the disk device of the present embodiment is characterized in that the support shaft main body has a wider width than the coil portion, and the projection distance of the stopper portion is set larger than the outer diameter of the wire member that forms the holddown spring.

With this configuration, even if, with the coil portion of the holddown spring fitted onto the support shaft main body of the support shaft panel, an excessive load is applied to the coil portion by an instrument or a finger of an operator in a direction of removing the coil portion from the support shaft panel, the width of the support shaft main body is set larger than that of the coil portion, and furthermore, the projection distance of the stopper portion is set larger than the outer diameter of the wire member forming the holddown spring, and thus, the coil portion never comes off from the support shaft main body, and it is possible to securely maintain the holddown spring fitted to the spring seat.

### List of Reference Symbols

- 1: loader chassis
- 1A: main body of loader chassis
- 1B: lid panel of loader chassis
- 2: disk insertion slot
- 3: turntable
- 5: optical pickup
- 30: spring seat
- 38: L-shape frame
- 38A: support panel of L-shape frame
- 38B: support shaft panel of L-shape frame
- 39: stopper portion
- 40: main body of support shaft
- 40A: flap-side edge of main body of support shaft
- 40B: lid panel-side edge of main body of support shaft
- 41: sloped guide edge
- Da: small disk
- Db: large disk
- a: slot in

## Claims

1. A disk device comprising:
a loader chassis that includes a disk insertion slot formed in a front surface thereof;
a conveyance roller that conveys a disk slotted in through the disk insertion slot into the loader chassis;
a flap that holds the disk in cooperation with the conveyance roller; and
a holddown spring that presses the flap toward the conveyance roller,
wherein
the loader chassis includes:
a chassis main body; and
a lid panel where a spring seat to which the holddown spring is fitted is provided,
the lid panel is provided with an opening;
the spring seat includes an L-shaped frame that includes:
a support panel that is integrally formed at an edge of the opening; and
a support shaft panel that is bent at a right angle from an end of the support panel,
the support panel is bent at a root part thereof such that the L-shaped frame is raised toward the flap side,
the support shaft panel includes:
a stopper portion that projects toward the flap side from a flap-side edge at an end of the support shaft panel; and
a support shaft main body between the stopper portion and the support panel,
a sloped guide edge is formed by cutting an end side of a lid panel-side edge of the support shaft panel, and
the holddown spring includes:
a coil portion that is fitted, along the sloped guide edge, onto the support shaft main body;
a first rod portion that extends from one end of the coil portion to engage with the lid portion; and
a second rod portion that extends from another end of the coil portion to be in contact with the flap.

2. The disk device of claim 1,
wherein
a width of the support shaft main body is set wider than a width of the coil portion, and
a projection height of the stopper portion is larger than an outer diameter of a wire member that forms the holddown spring.

3. The disk device of claim 1,
wherein
the L-shaped frame is obtained as a portion that is left after cutting the lid panel to form the opening.

4. The disk device of claim 2,
wherein
the L-shaped frame is obtained as a portion that is left after cutting the lid panel to form the opening.

5. The disk device of claim 1,
wherein
the stopper portion includes a sloped side edge formed at an edge thereof on the support shaft main body side, and
the sloped side edge is sloped at a predetermined slope angle with respect to the support shaft main body.

6. The disk device of claim 2,
wherein
the stopper portion includes a sloped side edge formed at an edge thereof on the support shaft main body side, and
the sloped side edge is sloped at a predetermined slope angle with respect to the support shaft main body.

7. The disk device of claim 3,
wherein
the stopper portion includes a sloped side edge formed at an edge thereof on the support shaft main body side, and
the sloped side edge is sloped at a predetermined slope angle with respect to the support shaft main body.

8. The disk device of claim 4,
wherein
the stopper portion includes a sloped side edge formed at an edge thereof on the support shaft main body side, and
the sloped side edge is sloped at a predetermined slope angle with respect to the support shaft main body.
